# EUROPÄISCHE PATENTSCHRIFT

(11) **EP 3 008 813 B1**
(45) Veröffentlichungstag und Bekanntmachung des Hinweises auf die Patenterteilung: **25.03.2020**
(21) Anmeldenummer: 14718077.2
(22) Anmeldetag: 16.04.2014
(51) Int. Cl.: H02P 21/00, F02D 11/10, H02P 21/06, H02P 21/12

(54) **VERFAHREN UND VORRICHTUNG ZUM BETREIBEN EINES ELEKTRONISCH KOMMUTIERTEN STELLMOTORS SOWIE STELLGEBERSYSTEM MIT EINEM STELLMOTOR**
METHOD AND DEVICE FOR OPERATING AN ELECTRICALLY COMMUTATED ACTUATOR AND ACTUATOR SYSTEM WITH ACTUATOR MOTOR
PROCÉDÉ ET DISPOSITIF POUR FAIRE FONCTIONNER UN MOTEUR DE COMMANDE À COMMUTATION ÉLECTRONIQUE ET SYSTÈME TRANSMETTEUR DE COMMANDE COMPORTANT UN MOTEUR DE COMMANDE

(30) Priorität: 13.06.2013 DE 102013211020
(43) Veröffentlichungstag der Anmeldung: 20.04.2016
(73) Patentinhaber: Robert Bosch GmbH, 70442 Stuttgart (DE)
(72) Erfinder: HOFFMANN, Ekkehard, 21037 Hamburg (DE); SIEBER, Udo, 74321 Bietigheim (DE); SCHWARZMANN, Dieter, 74081 Heilbronn (DE); MAUK, Tobias, 70195 Stuttgart (DE)
(86) Internationale Anmeldenummer: PCT/EP2014/057742
(87) Internationale Veröffentlichungsnummer: WO 2014/198444

(56) Entgegenhaltungen:
- WO-A2-2011/124346
- DE-A1-102008 042 931
- DE-A1-102011 005 566
- US-A1- 2011 273 127
- ADNANES A K ED - INSTITUTE OF ELECTRICAL AND ELECTRONICS ENGINEERS: "Torque analysis of permanent magnet synchronous motors", PROCEEDINGS OF THE ANNUAL POWER ELECTRONICS SPECIALISTS CONFERENCE. MASSACHUSETTS, 25 - 27 JUNE, 1991; [PROCEEDINGS OF THE ANNUAL POWER ELECTRONICS SPECIALISTS CONFERENCE], NEW YORK, IEEE, US, Bd. CONF. 22, 24. Juni 1991 (1991-06-24), Seiten 695-701, XP010048389, DOI: 10.1109/PESC.1991.162751 ISBN: 978-0-7803-0090-3

## Beschreibung

### Technisches Gebiet

Die vorliegende Erfindung betrifft elektronisch kommutierte elektrische Maschinen, insbesondere für Stellgeberanwendungen, wie beispielsweise für einen Drosselklappenstellgeber. Die Erfindung betrifft weiterhin Maßnahmen zur Strombegrenzung bei einer derart angesteuerten elektrischen Maschine.

### Stand der Technik

In Stellgeberanwendungen können als Ersatz für bürstenkommutierte Gleichstrommotoren auch elektronisch kommutierte Gleichstrommotoren, so genannte bürstenlose Gleichstrommotoren, eingesetzt werden. Diese verfügen in der Regel bei vergleichbaren sonstigen Leistungsdaten über einen besseren Wirkungsgrad sowie eine geringere Baugröße. Im Gegensatz zu bürstenkommutierten Gleichstrommotoren müssen die elektronisch kommutierten Gleichstrommotoren jedoch elektronisch angesteuert bzw. kommutiert werden, wobei zur Auswahl der Ansteuerspannungen eine relativ genaue Kenntnis der Läuferlage und für momentenbasierte Regelungen die des Motorstroms erforderlich ist. Ungenauigkeiten bei der Läuferlageerfassung und/oder bei der Strommessung führen zu deutlichen Reduzierungen des Wirkungsgrads und des bereitgestellten Antriebsmoments.

Für Drosselklappenstellgeber ist vorgesehen, den Stellmotor durch einen elektronisch kommutierten Antriebsmotor zu ersetzen und anstelle einer direkten Läuferlageerfassung auf der Motorwelle die Läuferlage indirekt basierend auf dem bereits vorhandenen Drosselklappenwinkelgeber an der Drosselklappe zu erfassen, die über ein untersetzendes Getriebe mit der Motorwelle verbunden ist. Diese Anordnung gestattet eine lediglich ungenaue Läuferlageerfassung mit typischen Unsicherheiten von mehr als 10° mechanischer Läuferlage.

Weiterhin soll aus Kostengründen auch auf das Vorsehen einer Stromsensorik zur Erfassung des Motorstroms verzichtet werden. Eine Ansteuerung mit Kommutierungsmustern, die abhängig von der erfassten Läuferlage angelegt werden, führt bei derart großen Winkelunsicherheiten sowie weiteren Parameterschwankungen zu einer Verletzung von Stromgrenzen, die zur Notabschaltung des Motors durch die Leistungselektronik führen können.

Es ist daher Aufgabe der vorliegenden Erfindung, eine robuste Ansteuerung für einen elektronisch kommutierten Stellgebermotor zur Verfügung zu stellen, bei der trotz bei der Bestimmung der Läuferlage auftretender Ungenauigkeiten und/oder anderer Parameterungenauigkeiten eine Überschreitung der Stromgrenzen ausgeschlossen wird und die somit einen zuverlässigen Betrieb ermöglicht.

Aus der US 2011 / 0273127 A1 ist eine Ventilkontrolleinrichtung mit einem bürstenlosen Gleichstrommotor (BLDC-Motor) bekannt.

### Offenbarung der Erfindung

Diese Aufgabe wird durch das Verfahren und Vorrichtung zum Betreiben eines elektronisch kommutierten Stellgebermotors gemäß der Ansprüche 1 und 10 sowie durch das Stellgebersystem und das Computerprogramm gemäß den nebengeordneten Ansprüchen gelöst.

Weitere vorteilhafte Ausgestaltungen der vorliegenden Erfindung sind in den abhängigen Ansprüchen angegeben.

Gemäß einem ersten Aspekt ist ein Verfahren zum Betreiben eines elektronisch kommutierten Stellmotors vorgesehen, wobei der Stellmotor durch einen gemäß einem Kommutierungsmuster generierten Spannungsraumzeiger abhängig von einem vorgegebenen Drehmoment und einer Läuferlage eines Läufers des Stellmotors gemäß einem Optimierungsziel angesteuert wird, wobei ein Ansteuerbereich vorgegeben ist, der einen Bereich zulässiger Spannungsraumzeiger angibt, wobei die Ansteuerung des Stellmotors so durchgeführt wird, dass nur Spannungsraumzeiger innerhalb des Ansteuerbereichs verwendet werden.

Weiterhin kann die Ansteuerung des Stellmotors basierend auf einem vorgegebenen Kennfeld durchgeführt werden, das den Spannungsraumzeiger abhängig von dem vorgegebenen Drehmoment und von der Läuferlage des Läufers des Stellmotors gemäß dem Optimierungsziel vorgibt.

Gemäß einer Ausführungsform kann das Kennfeld weiterhin Spannungsraumzeiger, die das Optimierungsziel nicht erfüllen, vorgeben, insbesondere an einem Rand des Ansteuerbereichs.

Ein elektronisch kommutierter Stellmotor weist Phasenanschlüsse auf, an denen je eine Phasenspannung gestellt werden kann. Die Ansteuerung des Stellmotors mit den Phasenspannungen wird Kommutierung genannt und gibt an, wie zu jedem Zeitpunkt die Phasenspannungen an den Stellmotor anzulegen sind, um den Motorstrom einzustellen, der das aktuell angeforderte Drehmoment erzeugt. Eingangsgrößen der Kommutierung sind das Solldrehmoment und der Läuferlagewinkel der Motorwelle.

Bei einem elektronisch kommutierten Stellmotor, bei dem keine Stromerfassung vorgesehen ist, wird der Stellmotor bezüglich des Motorstroms ungeregelt betrieben. In diesem Fall wird als Eingangsgröße für die Kommutierung neben dem Solldrehmoment und dem Läuferlagewinkel der Motorwelle auch die Drehzahl benötigt. Ein idealer Stellmotor würde bei einer bestimmten angelegten Ansteuerspannung das erwartete Drehmoment liefern und es würde sich der entsprechende Motorstrom einstellen.

Die Motorparameter des Stellmotors können jedoch bedingt durch Serienstreuung und Temperatureinflüsse abweichen und/oder die Läuferlageerfassung kann aufgrund einer indirekten Erfassung fehlerbehaftet sein. Dies führt zu einer Fehlkommutierung, bei der der Motorstrom und das daraus resultierende Drehmoment von den Sollwerten abweichen. Führt die Abweichung zu unzulässig hohen Motorströmen, so muss die Leistungselektronik den Betrieb des Stellmotors unterbrechen, um eine Überhitzung bzw. Zerstörung des Stellmotors oder der Elektronik zu vermeiden. Insbesondere in sicherheitskritischen Einsatzgebieten, wie beispielsweise bei einem Drosselklappenstellgeber in einem Verbrennungsmotor, muss ein solcher Fall unter allen Umständen vermieden werden. Daher muss die Ansteuerung des Stellmotors so durchgeführt werden, dass selbst bei ungenauer Läuferlageerfassung sowie Schwankungen bzw. Unsicherheiten bezüglich der Motorparameter der Betrag des Motorstroms einen Motorstromschwellenwert nicht überschreitet.

In den meisten Betriebspunkten kann der Stellmotor bezüglich eines Optimierungsziels betrieben werden. Gemäß dem obigen Betriebsverfahren ist vorgesehen, bei einem Betrieb in einem Grenzbereich zugunsten der Robustheit von dem Optimierungsziel abzuweichen.

Das obige Verfahren sieht vor, zunächst das Solldrehmoment einem Spannungszeiger in einem läuferfesten d-q-Koordinatensystem zuzuordnen, beispielsweise mithilfe von in geeigneter Weise parametrierten Kennfeldern. Der zu stellende Spannungszeiger ergibt sich abhängig von dem Solldrehmoment, der Drehzahl und einem vorgegebenen Optimierungsziel aus einem entsprechenden Kennfeld, das offline berechnet und zur Durchführung des Verfahrens bereitgestellt sein kann. Wurde aus dem Kennfeld der zu stellende Spannungszeiger im läuferfesten d-q-Koordinatensystem ermittelt, so kann eine Koordinatentransformation durchgeführt werden, um abhängig von der Läuferlage die Phasenspannungen zum Ansteuern des mehrphasigen elektronisch kommutierten Stellmotors zu bestimmen.

Da mit mehreren zu stellenden Phasenspannungen nur eine Zielgröße, d. h. das Solldrehmoment, eingestellt werden soll, existiert eine Vielzahl von Ansteuerungsmöglichkeiten, um ein vorgegebenes Solldrehmoment zu erreichen. Bei drei Phasenspannungen steht hierbei effektiv ein Freiheitsgrad zur Verfügung, der ein Optimierungspotential eröffnet. Dieser Freiheitsgrad kann für jede Drehzahl und jedes zu erzielende Solldrehmoment getrennt und unterschiedlich genutzt werden. Gemäß dem obigen Verfahren wird dieser Freiheitsgrad genutzt, um im nominellen Fall eine Ansteuerung gemäß einem Optimierungsziel zu realisieren. Dazu muss die Ansteuerung, d. h. das Kommutierungsmuster, für jede Drehzahl und jedes Solldrehmoment getrennt bestimmt werden, mit der das Optimierungsziel am besten erreicht werden kann.

Weiterhin kann als Nebenbedingung der Optimierung festgelegt werden, dass für die Optimierung nur solche Lösungen in Betracht gezogen werden, die bei ungenauer Läuferlageerfassung und bei Parameterabweichungen bzw. -ungenauigkeiten auch im ungünstigsten Fall nicht zu einer Überschreitung des maximal zulässigen Motorstroms führen können. Zum Erstellen des Kennfelds muss ein maximal möglicher zu tolerierender Fehler bei der Bestimmung der Läuferlage spezifiziert werden. Alternativ oder zusätzlich sind die möglichen Abweichungen der Parameter von ihren nominellen Werten zu quantifizieren. Hieraus ist in der Optimierung abhängig von dem Solldrehmoment und der Drehzahl für jede mögliche Ansteuerung eine ungünstige Kombination zu ermitteln, die maßgeblich dafür ist, ob diese mögliche Ansteuerung zulässig ist oder nicht. Aus allen zulässigen Ansteuerungen kann dann die im Hinblick auf das Optimierungsziel beste Möglichkeit gewählt werden.

Diese Erstellung des Kennfelds kann offline durchgeführt werden und die so erhaltenen Kennfelder werden bei der Ansteuerung des Stellmotors bereitgestellt.

Das Verfahren zum Betreiben des Stellmotors hat den Vorteil, dass selbst bei Parameterabweichungen von nominellen Parameterwerten und/oder bei ungenauer Erfassung oder Bereitstellung der Läuferlage ein Überschreiten des zulässigen Motorstroms verhindert wird.

Insbesondere kann das Kennfeld weiterhin Spannungsraumzeiger entlang eines Randes des Ansteuerbereichs von einem Spannungsraumzeiger, durch den das Optimierungsziel erfüllt wird, bis zu einem Spannungsraumzeiger, durch den ein maximal erreichbares Drehmoment bereitgestellt wird, definieren.

Es kann vorgesehen sein, dass die Spannungsraumzeiger des Kennfelds auf die durch den Ansteuerbereich zugelassenen Spannungsraumzeiger begrenzt werden.

Gemäß einer Ausführungsform kann für ein vorgegebenes Drehmoment und eine Läuferlage, für die innerhalb des Ansteuerbereichs kein Spannungsraumzeiger existiert, der das Optimierungsziel erfüllt, ein Spannungsraumzeiger, durch den das vorgegebene Drehmoment bereitgestellt wird, innerhalb des Ansteuerbereichs gewählt werden, der den kleinsten Abstand zu einem das Optimierungsziel erfüllenden Spannungsraumzeiger aufweist.

Weiterhin kann der Stellmotor durch einen gemäß einem Kommutierungsmuster generierten Spannungsraumzeiger weiterhin abhängig von einer aktuellen Drehzahl des Stellmotors angesteuert werden.

Der Ansteuerbereich kann einen Bereich von zulässigen Spannungsraumzeigern angeben, bei denen ein Betrag eines Motorstroms einen vorgegebenen Motorstromschwellenwert und/oder ein Betrag einer Motorspannung einen vorgegebenen Motorspannungsschwellenwert nicht übersteigt.

Weiterhin kann der Ansteuerbereich von zulässigen Spannungsraumzeigern so definiert sein, dass der vorgegebene Motorstromschwellenwert und/oder der vorgegebene Motorspannungsschwellenwert auch bei Abweichung der angegebenen Läuferlage (L) von einer tatsächlichen Läuferlage um eine vorgegebene Ungenauigkeit und/oder einer Abweichung eines oder mehrerer Motorparameter des Stellmotors (2) von entsprechenden Sollwerten um eine vorgegebene Ungenauigkeit nicht überschritten wird.

Es kann vorgesehen sein, dass das Optimierungsziel für das Kennfeld so bestimmt ist, dass dem vorgegebenen Solldrehmoment ein Spannungsraumzeiger zugeordnet wird, bei dem ein maximaler Wirkungsgrad des Stellmotors erreicht wird.

Gemäß einem weiteren Aspekt ist eine Vorrichtung zum Betreiben eines elektronisch kommutierten Stellmotors vorgesehen, wobei die Vorrichtung ausgebildet ist, um
- den Stellmotor durch einen gemäß einem Kommutierungsmuster generierten Spannungsraumzeiger abhängig von einem vorgegebenen Drehmoment und einer Läuferlage (L) eines Läufers des Stellmotors gemäß einem Optimierungsziel anzusteuern;
- einen Ansteuerbereich vorzugeben, der zulässige Spannungsraumzeiger angibt; und
- die Ansteuerung des Stellmotors so durchzuführen, dass nur Spannungsraumzeiger innerhalb des Ansteuerbereichs verwendet werden.

Gemäß einem weiteren Aspekt ist ein Stellgebersystem vorgesehen, umfassend:
- einen elektronisch kommutierten Stellmotor zum Antreiben eines Stellglieds; und
- die obige Vorrichtung.

Gemäß einem weiteren Aspekt ist ein Computerprogrammprodukt vorgesehen, das einen Programmcode enthält, der, wenn er auf einer Recheneinheit ausgeführt wird, das obige Verfahren durchführt.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: ein Stellgebersystem mit einem elektronisch kommutierten Stellmotor;
- Figur 2: ein Diagramm zur Darstellung eines robusten zulässigen Ansteuerbereichs und einer beispielhaften Kommutierungsstrategie in einem läuferfesten d-q-Koordinatensystem bei einer vorgegebenen Drehzahl des Stellmotors; und
- Figur 3: eine funktionelle Darstellung des Verfahrens zum Ermitteln der Phasenspannungen zum Betreiben des elektronisch kommutierten Stellmotors.

### Beschreibung von Ausführungsformen

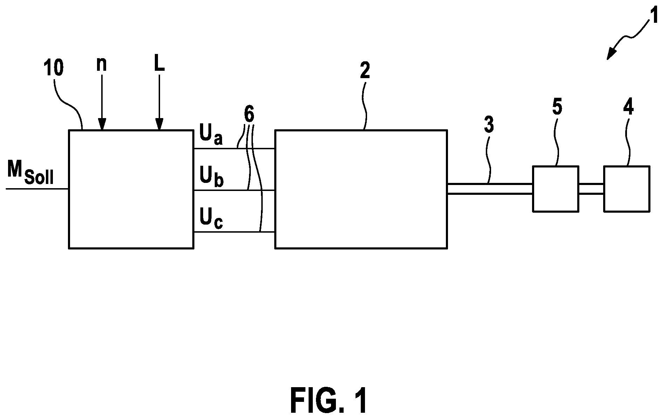

Figur 1 zeigt ein Stellgebersystem 1 mit einem Stellmotor 2, der als elektronisch kommutierter Elektromotor ausgebildet ist. Der Stellmotor 2 treibt über eine Motorwelle 3 ein Stellglied 4 über eine Mechanik oder ein Getriebe 5 an. Beispielsweise kann das Stellgebersystem 1 einem Drosselklappenstellgeber entsprechen, bei dem eine Stellung einer Drosselklappe als Stellglied in einem Luftzuführungssystem eines Verbrennungsmotors durch entsprechende Ansteuerung des Stellmotors 2 gestellt wird.

Der Stellmotor 2 wird über mehrere Phasenanschlüsse 6 elektrisch angesteuert. Im vorliegenden Fall ist der Stellmotor 2 als dreiphasige elektrische Maschine ausgebildet. An den Stellmotor 2 werden Phasenspannungen Uₐ, U_{b}, U_{c} (Phasenpotentiale) angelegt, die zu einer entsprechenden Stromaufnahme des Stellmotors 2 führen, aus der das von dem Stellmotor 2 über die Motorwelle 3 bereitgestellte Drehmoment resultiert.

Die Ansteuerung des Stellmotors 2 erfolgt über eine Steuereinheit 10, die ein Solldrehmoment M_{Soll} als Vorgabewert erhält und mithilfe einer geeigneten Sensorik eine Drehzahlangabe n und eine Angabe über die Läuferlage L erhält. Die Steuereinheit 10 generiert die Phasenspannungen Uₐ, U_{b}, U_{c} zur Ansteuerung des Stellmotors 2.

Das Solldrehmoment M_{Soll} als Vorgabegröße dient zur Durchführung einer Kommutierung für die Phasenspannungen Uₐ, U_{b}, U_{c} abhängig von einem Kommutierungsmuster. Die Kommutierung bezeichnet die Art und Weise, wie zu jedem Zeitpunkt die Phasenspannungen Uₐ, U_{b}, U_{c} an den Phasenanschlüssen 6 des Stellmotors 2 anzulegen sind, um das aktuell angeforderte Solldrehmoment M_{Soll} zu erzeugen. Bei drei oder mehr zu stellenden Phasenspannungen gibt es eine Vielzahl von Ansteuerungsmöglichkeiten, um ein Solldrehmoment M_{Soll} zu erreichen. Dabei steht mindestens ein Freiheitsgrad zur Verfügung, der ein Optimierungspotential eröffnet. Dieser Freiheitsgrad kann für jede Drehzahl bzw. für jeden Drehzahlbereich für jedes zu erzielende Solldrehmoment M_{Soll} getrennt und unterschiedlich genutzt werden,

Das obige Stellgebersystem 1 soll mit einer hohen Robustheit erstellt werden. Jedoch kommt es bei der Erfassung der Läuferlage L sowie aufgrund von Parameterschwankungen des Stellmotors 2 häufig zu Abweichungen zwischen der idealen und der tatsächlichen Stromaufnahme. Überschreitet der Motorstrom einen vorgegebenen Motorstromschwellenwert, so sieht die Steuereinheit 10 in der Regel eine Notabschaltung vor, um die Steuereinheit 10 und/oder den Stellmotor 2 vor Beschädigungen oder Zerstörung zu schützen.

Insbesondere bei Stellgebersystemen 2, in denen die Läuferlageerfassung indirekt erfolgt, d. h. beispielsweise an dem durch das Getriebe 5 mit dem Stellmotor 2 verbundenen Stellglied 4, kann eine hohe Ungenauigkeit bei der Erfassung der Läuferlage L vorliegen, die deutlich mehr als 10° mechanischer Winkellage betragen kann.

Bei der Ansteuerung mit den Phasenspannungen Uₐ, U_{b}, U_{c} wird ein Raumzeiger gebildet, der eine Richtung eines im Betrieb des Stellmotors 2 umlaufenden Statormagnetfelds angibt. Um den Raumzeiger drehzahlunabhängig darstellen zu können, wird dieser in der Regel in einem läuferfesten d-q-Koordinatensystem dargestellt.

Die Freiheitsgrade können bei einer Optimierung gemäß einem vorgegebenen Optimierungsziel, beispielsweise einer Optimierung hinsichtlich des Wirkungsgrads, genutzt werden.

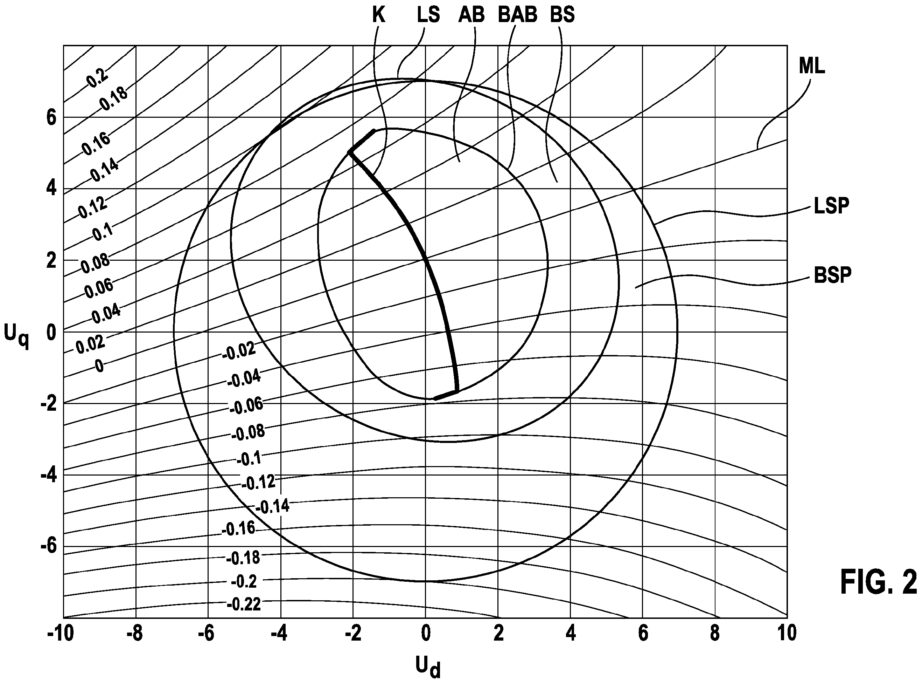

In Figur 2 ist ein Diagramm der Spannungszeiger U_{d}, U_{q} des d-q-Koordinatensystems dargestellt. Durch die kreisförmigen bzw. etwa elliptischen Begrenzungslinien sind weiterhin der Strombereich BS der zulässigen Ströme und der Spannungsbereich BSP der zulässigen Spannung dargestellt. Der Strombereich BS der zulässigen Motorströme stellt den Bereich von Raumzeigern im läuferfesten d-q-Koordinatensystem dar, in dem die Beträge der Motorströme unterhalb eines vorgegebenen Motorstromschwellenwerts liegen. Die Strombegrenzungslinie LS des Strombereichs BS der zulässigen Motorströme stellt dabei die Linie aller U_{q}-, U_{d}-Kombinationen dar, bei denen der Motorstrom den Motorstromschwellenwert erreicht.

Analog stellt der Spannungsbereich BSP der zulässigen Motorspannungen den Bereich dar, in dem die Raumzeiger U_{q}, U_{d} liegen dürfen, so dass ein vorgegebener Motorspannungsschwellenwert nicht überschritten wird. Der Motorspannungsschwellenwert, der sich aus den Phasenspannungen Uₐ, U_{b}, U_{c} zwischen zwei Phasenanschlüssen 6 ergibt, ist im Wesentlichen durch die Verfügbarkeit der Versorgungsspannung für den Betrieb des Stellmotors 2 begrenzt. Der Spannungsbereich BSP der bei vorgegebener Versorgungsspannung zulässigen bzw. bereitstellbaren Phasenspannungen Uₐ, U_{b}, U_{c} ist durch die Spannungsbegrenzungslinie LSP dargestellt, die die Menge aller Raumzeiger U_{q}, U_{d} angibt, bei denen die Phasenspannungen Uₐ, U_{b}, U_{c} dem vorgegebenen Phasenspannungsschwellenwert entsprechen.

Ausgehend von dem Strombereich BS und dem Spannungsbereich BSP der zulässigen Motorströme und der zulässigen Phasenspannungen Uₐ, U_{b}, U_{c} wird nun ein robuster zulässiger Ansteuerungsbereich AB ermittelt, der bei einer vorgegebenen Ungenauigkeit der Läuferlageerfassung und/oder einer Parameterungenauigkeit eine Erhöhung des Motorstroms über den durch die Strombegrenzungslinie LS vorgegebenen Motorstromschwellenwert hinaus in jedem Fall ausschließt. Es wird also mithilfe der vorgegebenen Läuferlageungenauigkeit und der vorgegebenen Parameterungenauigkeit ein Worst-Case-Szenario für jede Drehzahl und für jeden Spannungsraumzeiger ermittelt.

Weiterhin werden in dem dargestellten Kennfeld die Raumzeigerwerte angegeben, um ein bestimmtes Drehmoment zu erreichen. Diese sind durch die Drehmomentlinien ML gekennzeichnet. Man erkennt, dass innerhalb des Ansteuerbereichs AB zum Bereitstellen eines Solldrehmoments M_{Soll} viele Raumzeigeransteuerungen möglich sind, um das vorgegebene Solldrehmoment M_{Soll} unter Vermeidung eines zu hohen Motorstroms bei Läuferlage- bzw. Parameterungenauigkeiten auszuwählen.

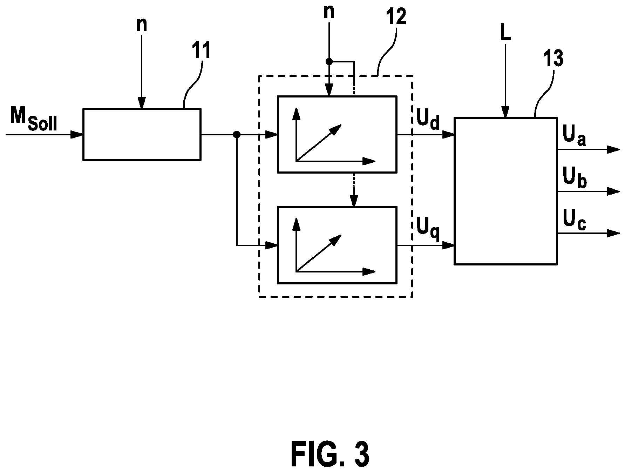

In Figur 3 ist eine schematische Darstellung der Steuereinheit 10 gezeigt. Die Steuereinheit 10 weist eine Begrenzungseinheit 11 auf, die abhängig von einer momentanen Drehzahl n und basierend auf dem vorgegebenen Solldrehmoment M_{Soll} das angeforderte Drehmoment begrenzt.

In dem Kennfeldblock 12 wird nun abhängig von dem angeforderten Drehmoment und der Drehzahl n ein zu stellender Raumzeiger U_{q}, U_{d} im läuferfesten d-q-Koordinatensystem ermittelt. Die Ermittlung erfolgt unter Bezugnahme auf das Diagramm der Figur 2 wie folgt:
Zunächst wird ein von dem angeforderten Solldrehmoment M_{Soll} und der Drehzahl aufgespanntes Kennfeld K bereitgestellt, bei dem innerhalb des Strombereichs BS und des Spannungsbereichs BSP, durch die unter Berücksichtigung der Parameterungenauigkeiten und Ungenauigkeiten der Läuferlageerfassung der Ansteuerbereich AB bestimmt wird, die Raumzeiger U_{q}, U_{d} einem Betriebspunkt zugeordnet sind, so dass das vorgegebene Optimierungsziel eingehalten wird. Existiert für das vorgegebene Solldrehmoment M_{Soll} und die aktuelle Drehzahl n ein innerhalb des Ansteuerbereichs AB liegender Raumzeiger U_{q}, U_{d} auf dem Kennfeld K, so wird dieser zur Ansteuerung des Stellmotors 2 verwendet.

Findet sich kein Schnittpunkt der Drehmomentlinie ML, die dem Solldrehmoment M_{Soll} entspricht, so wird an einer äußeren Begrenzungslinie BAB des Ansteuerbereichs AB das vorgegebene Kennfeld K verlassen und stattdessen auf der Begrenzungslinie BAB für den Ansteuerbereich AB überprüft, ob das gewünschte Solldrehmoment M_{Soll} mit einem Raumzeiger U_{q}, U_{d} auf der betreffenden Begrenzungslinie BAB des Ansteuerbereichs AB erreicht werden kann. Ist dies der Fall, so wird der entsprechende Raumzeiger U_{q}, U_{d} bereitgestellt. Andernfalls wird der Raumzeiger U_{q}, U_{d} gestellt, mit dem sich das maximale Drehmoment erreichen lässt, ohne den zulässigen Ansteuerbereich AB zu verlassen.

In einem Koordinatentransformationsblock 13 wird der bereitgestellte Raumzeiger U_{q}, U_{d} mithilfe der erfassten Läuferlage L in die entsprechenden Phasenspannungen Uₐ, U_{b}, U_{c} umgewandelt.

Das Kennfeld K zur Ermittlung des optimierten Raumzeigers U_{q}, U_{d} mit den Eingangsgrößen Solldrehmoment M_{Soll} und Drehzahl n wird offline erstellt und in der Steuereinheit 10, beispielsweise durch eine Lookup-Tabelle oder eine sonstige das Kennfeld K darstellende Funktion, abgebildet bzw. gespeichert. Die Optimierung erfolgt basierend auf herkömmlichen Verfahren und führt zu dem Kennfeld K, das im Inneren des Ansteuerbereichs AB gültig ist. Die Raumzeiger U_{q}, U_{d} des Kennfelds K, die sich auf der Begrenzungslinie BL des Ansteuerbereichs befinden, ersetzen die Raumzeigerkennlinie bis hin zu einem betragsmäßig höchsten Drehmoment, so dass die Raumzeiger U_{q}, U_{d}, sobald die Raumzeigerkennlinie auf die Begrenzungslinie BAB trifft, in Richtung betragsmäßig höherer Drehmomente durch die Begrenzungslinie BAB vorgegeben werden. Es ergibt sich eine charakteristische Dreiteilung der Kennlinie, wie sie in Figur 2 im Inneren des Ansteuerbereichs dargestellt ist.

Als Optimierungsziel für die Raumzeigerkennlinie im Inneren des zulässigen Ansteuerbereichs können anstelle einer Maximierung des Wirkungsgrads auch andere Ziele verfolgt werden.

Da die Parameterunsicherheiten zu einem wesentlichen Teil auf Temperatureinflüsse zurückzuführen sind, kann die Berücksichtigung des gesamten Temperaturbereichs des Stellmotors 2 das robust zur Verfügung stehende Drehmoment stark einschränken. Kann die aktuelle Temperatur des Stellmotors 2 bestimmt oder abgeschätzt werden, so kann die Ansteuerung für verschiedene Temperaturbereiche getrennt ausgelegt und je nach der aktuellen Temperatur zwischen vorgegebenen Kennfeldern umgeschaltet werden.

## Patentansprüche

1. Verfahren zum Betreiben eines elektronisch kommutierten Stellmotors (2), wobei der Stellmotor (2) durch einen gemäß einem Kommutierungsmuster generierten Spannungsraumzeiger abhängig von einem vorgegebenen Drehmoment und einer Läuferlage (L) eines Läufers des Stellmotors (2) gemäß einem Optimierungsziel angesteuert wird,
wobei ein Ansteuerbereich vorgegeben ist, der einen Bereich zulässiger Spannungsraumzeiger angibt, wobei die Ansteuerung des Stellmotors (2) so durchgeführt wird, dass nur Spannungsraumzeiger innerhalb des Ansteuerbereichs verwendet werden, **dadurch gekennzeichnet dass** die Ansteuerung des Stellmotors (2) basierend auf einem vorgegebenen Kennfeld durchgeführt wird, das den Spannungsraumzeiger abhängig von dem vorgegebenen Drehmoment und von der Läuferlage (L) des Läufers des Stellmotors (2) gemäß dem Optimierungsziel vorgibt.

2. Verfahren nach Anspruch 1, wobei das Kennfeld weiterhin Spannungsraumzeiger, die das Optimierungsziel nicht erfüllen, vorgibt, insbesondere an einem Rand des Ansteuerbereichs.

3. Verfahren nacheinem der vorhergehenden Ansprüche, wobei das Kennfeld weiterhin Spannungsraumzeiger entlang eines Randes des Ansteuerbereichs von einem Spannungsraumzeiger, durch den das Optimierungsziel erfüllt wird, bis zu einem Spannungsraumzeiger, durch den ein maximal erreichbares Drehmoment bereitgestellt wird, definiert.

4. Verfahren nach einem der vorhergehenden Ansprüche, wobei die Spannungsraumzeiger des Kennfelds auf die durch den Ansteuerbereich zugelassenen Spannungsraumzeiger begrenzt werden.

5. Verfahren nach einem der vorhergehenden Ansprüche, wobei für ein vorgegebenes Drehmoment und eine Läuferlage, für die innerhalb des Ansteuerbereichs kein Spannungsraumzeiger existiert, der das Optimierungsziel erfüllt, ein Spannungsraumzeiger, durch den das vorgegebene Drehmoment bereitgestellt wird, innerhalb des Ansteuerbereichs gewählt wird, der den kleinsten Abstand zu einem Spannungsraumzeiger auf der Kennlinie aufweist.

6. Verfahren nach einem der einem der vorhergehenden Ansprüche, wobei der Stellmotor (2) durch einen gemäß einem Kommutierungsmuster generierten Spannungsraumzeiger weiterhin abhängig von einer aktuellen Drehzahl des Stellmotors (2) angesteuert wird.

7. Verfahren nach einem der einem der vorhergehenden Ansprüche, wobei der Ansteuerbereich einen Bereich von zulässigen Spannungsraumzeigern angibt, bei denen ein Betrag eines Motorstroms einen vorgegebenen Motorstromschwellenwert und/oder ein Betrag einer Motorspannung einen vorgegebenen Motorspannungsschwellenwert nicht übersteigt.

8. Verfahren nach Anspruch 7, wobei der Ansteuerbereich von zulässigen Spannungsraumzeigern so definiert ist, dass der vorgegebene Motorstromschwehenwert und/oder der vorgegebene Motorspannungsschwellenwert auch bei Abweichung der angegebenen Läuferlage (L) von einer tatsächlichen Läuferlage um eine vorgegebene Ungenauigkeit und/oder einer Abweichung eines oder mehrerer Motorparameter des Stellmotors (2) von entsprechenden Sollwerten um eine vorgegebene Ungenauigkeit nicht überschritten wird.

9. Verfahren nach einem der vorhergehenden Ansprüche, wobei das Optimierungsziel für das Kennfeld (K) so bestimmt ist, dass dem vorgegebenen Solldrehmoment (M_{Soll}) ein Spannungsraumzeiger zugeordnet wird, bei dem ein maximaler Wirkungsgrad des Stellmotors (2) erreicht wird.

10. Vorrichtung zum Betreiben eines elektronisch kommutierten Stellmotors (2), wobei die Vorrichtung ausgebildet ist, um
- den Stellmotor (2) durch einen gemäß einem Kommutierungsmuster generierten Spannungsraumzeiger abhängig von einem vorgegebenen Drehmoment und einer Läuferlage (L) eines Läufers des Stellmotors (2) gemäß einem Optimierungsziel anzusteuern,
wobei die Ansteuerung des Stellmotors (2) basierend auf einem vorgegebenen Kennfeld durchgeführt wird, das den Spannungsraumzeiger abhängig von dem vorgegebenen Drehmoment und von der Läuferlage (L) des Läufers des Stellmotors (2) gemäß dem Optimierungsziel vorgibt;
- einen Ansteuerbereich vorzugeben, der zulässige Spannungsraumzeiger angibt; und
- die Ansteuerung des Stellmotors (2) so durchzuführen, dass nur Spannungsraumzeiger innerhalb des Ansteuerbereichs verwendet werden.

11. Stellgebersystem (1), umfassend:
- einen elektronisch kommutierten Stellmotor (2) zum Antreiben eines Stellglieds (4); und
- eine Vorrichtung nach Anspruch 10.

12. Computerprogramm, das ausgebildet ist, um alle Schritte des Verfahrens nach einem der Ansprüche 1 bis 9 auszuführen.

13. Elektronisches Speichermedium, auf welchem ein Computerprogramm nach Anspruch 12 gespeichert ist.

14. Elektronisches Steuergerät, welches ein elektronisches Speichermedium nach Anspruch 13 aufweist.

15. Computerprogrammprodukt, das einen Programmcode enthält, der, wenn er auf einer Recheneinheit ausgeführt wird, das Verfahren nach einem der Ansprüche 1 bis 9 durchführt.

## Claims

1. Method for operating an electronically commutated servomotor (2), wherein the servomotor (2) is controlled according to an optimization target via a voltage space vector generated according to a commutation pattern, as a function of a predefined torque and a rotor position (L) of a rotor of the servomotor (2),
wherein a control range is predefined which specifies a range of allowable voltage space vectors, wherein the control of the servomotor (2) is carried out in such a way that only voltage space vectors within the control range are used,
**characterized in that**
the control of the servomotor (2) is carried out based on a predefined characteristic map which specifies the voltage space vector according to the optimization target, as a function of the predefined torque and the rotor position (L) of the rotor of the servomotor (2).

2. Method according to Claim 1, wherein the
characteristic map furthermore identifies voltage space vectors which do not meet the optimization target, in particular at a boundary of the control range.

3. Method according to one of the preceding claims, wherein the characteristic map furthermore defines voltage space vectors along a boundary of the control range, from a voltage space vector via which the optimization target is met, up to a voltage space vector via which a maximum achievable torque is provided.

4. Method according to one of the preceding claims, wherein the voltage space vectors of the characteristic map are limited to the voltage space vectors allowed by the control range.

5. Method according to one of the preceding claims, wherein, for a predefined torque and a rotor position for which no voltage space vector exists which meets the optimization target within the control range, a voltage space vector, via which the predefined torque is provided, which has the shortest distance from a voltage space vector on the characteristic curve, is selected within the control range.

6. Method according to one of the preceding claims, wherein the servomotor (2) is furthermore controlled via a voltage space vector generated according to a commutation pattern, as a function of an instantaneous rotational speed of the servomotor (2).

7. Method according to one of the preceding claims, wherein the control range specifies a range of allowable voltage space vectors in which a magnitude of a motor current does not exceed a predefined motor current threshold value and/or a magnitude of a motor voltage does not exceed a predefined motor voltage threshold value.

8. Method according to Claim 7, wherein the control range of allowable voltage space vectors is defined in such a way that the predefined motor current threshold value and/or the predefined motor voltage threshold value is not exceeded, even in the case of deviation of the specified rotor position (L) from an actual rotor position by a predefined inaccuracy and/or a deviation of one or multiple motor parameters of the servomotor (2) from corresponding setpoint values by a predefined inaccuracy.

9. Method according to one of the preceding claims, wherein the optimization target for the characteristic map (K) is determined in such a way that a voltage space vector is associated with the predefined setpoint torque (Mₛₒₗₗ), with which voltage space vector a maximum efficiency of the servomotor (2) is achieved.

10. Device for operating an electronically commutated servomotor (2), wherein the device is designed to
- control the servomotor (2) according to an optimization target via a voltage space vector generated according to a commutation pattern, as a function of a predefined torque and a rotor position (L) of a rotor of the servomotor (2),
wherein the control of the servomotor (2) is carried out based on a predefined characteristic map which specifies the voltage space vector according to the optimization target, as a function of the predefined torque and the rotor position (L) of the rotor of the servomotor (2);
- specify a control range which indicates allowable voltage space vectors; and
- carry out the control of the servomotor (2) in such a way that only voltage space vectors within the control range are used.

11. Position sensor system (1), comprising:
- an electronically commutated servomotor (2) for driving an actuator (4); and
- a device according to Claim 10.

12. Computer program which is designed to execute all steps of the method according to one of Claims 1 to 9.

13. Electronic storage medium on which a computer program according to Claim 12 is stored.

14. Electronic control unit which has an electronic storage medium according to Claim 13.

15. Computer program product which contains a program code which carries out the method according to one of Claims 1 to 9, if it is executed on a computing unit.

## Revendications

1. Procédé pour faire fonctionner un servomoteur (2) à commutation électronique, le servomoteur (2) étant commandé par un vecteur spatial de tension généré conformément à un modèle de commutation en fonction d'un couple prédéfini et d'une position de rotor (L) d'un rotor du servomoteur (2) conformément à un objectif d'optimisation,
une plage de commande étant prédéfinie, laquelle indique une plage de vecteurs spatiaux de tension admissibles, la commande du servomoteur (2) étant effectuée de telle sorte que seuls sont utilisés les vecteurs spatiaux de tension au sein de la plage de commande,
**caractérisé en ce que**
la commande du servomoteur (2) est effectuée en se basant sur un diagramme caractéristique prédéfini qui prédéfinit le vecteur spatial de tension en fonction du couple prédéfini et de la position de rotor (L) du rotor du servomoteur (2) conformément à un objectif d'optimisation.

2. Procédé selon la revendication 1, le diagramme
caractéristique prédéfinissant en outre des vecteurs spatiaux de tension qui ne réalisent pas l'objectif d'optimisation, notamment au niveau d'un bord de la plage de commande.

3. Procédé selon l'une des revendications précédentes, le diagramme caractéristique définissant en outre des vecteurs spatiaux de tension le long d'un bord de la plage de commande d'un vecteur spatial de tension, par lequel l'objectif d'optimisation est réalisé, jusqu'à un vecteur spatial de tension, par lequel un couple maximal pouvant être atteint est fourni.

4. Procédé selon l'une des revendications précédentes, les vecteurs spatiaux de tension du diagramme caractéristique étant limités aux vecteurs spatiaux de tension autorisés par la plage de commande.

5. Procédé selon l'une des revendications précédentes, selon lequel, pour un couple prédéfini et une position de rotor pour lesquels il n'existe au sein de la plage de commande aucun vecteur spatial de tension qui réalise l'objectif d'optimisation, un vecteur spatial de tension, par lequel le couple prédéfini est fourni, est sélectionné au sein de la plage de commande qui présente le plus petit écart par rapport à un vecteur spatial de tension sur la courbe caractéristique.

6. Procédé selon l'une des revendications précédentes, le servomoteur (2) étant en outre commandé par un vecteur spatial de tension généré conformément à un modèle de commutation en fonction d'une vitesse de rotation actuelle du servomoteur (2).

7. Procédé selon l'une des revendications précédentes, la plage de commande indiquant une plage de vecteurs spatiaux de tension admissibles avec lesquels une valeur d'un courant de moteur ne dépasse pas une valeur de seuil de courant de moteur prédéfinie et/ou une valeur d'une tension de moteur ne dépasse pas une valeur de seuil de tension de moteur prédéfinie.

8. Procédé selon la revendication 7, la plage de commande de vecteurs spatiaux de tension admissibles étant définie de telle sorte que la valeur de seuil de courant de moteur prédéfinie et/ou la valeur de seuil de tension de moteur prédéfinie n'est pas dépassée même en cas d'écart entre la position de rotor (L) indiquée et une position de rotor effective d'une imprécision prédéfinie et/ou lors d'un écart entre un ou plusieurs paramètres de moteur du servomoteur (2) et des valeurs de consigne correspondantes d'une imprécision prédéfinie.

9. Procédé selon l'une des revendications précédentes, l'objectif d'optimisation pour le diagramme caractéristique (K) étant déterminé de telle sorte qu'un vecteur spatial de tension avec lequel un rendement maximal du servomoteur (2) est atteint est associé au couple de consigne (Mₛₒₗₗ) prédéfini.

10. Dispositif pour faire fonctionner un servomoteur (2) à commutation électronique, le dispositif étant configuré pour
- commander le servomoteur (2) par un vecteur spatial de tension généré conformément à un modèle de commutation en fonction d'un couple prédéfini et d'une position de rotor (L) d'un rotor du servomoteur (2) conformément à un objectif d'optimisation,
la commande du servomoteur (2) étant effectuée en se basant sur un diagramme caractéristique prédéfini qui prédéfinit le vecteur spatial de tension en fonction du couple prédéfini et de la position de rotor (L) du rotor du servomoteur (2) conformément à l'objectif d'optimisation ;
- prédéfinir une plage de commande, laquelle indique des vecteurs spatiaux de tension admissibles ; et
- effectuer la commande du servomoteur (2) de telle sorte que seuls sont utilisés les vecteurs spatiaux de tension au sein de la plage de commande.

11. Système transmetteur de commande (1), comprenant
- un servomoteur (2) à commutation électronique destiné à entraîner un actionneur (4) ; et
- un dispositif selon la revendication 10.

12. Programme informatique, qui est configuré pour exécuter toutes les étapes du procédé selon l'une des revendications 1 à 9.

13. Support d'enregistrement électronique, sur lequel est enregistré un programme informatique selon la revendication 12.

14. Contrôleur électronique, qui possède un support d'enregistrement électronique selon la revendication 13.

15. Produit de programme informatique, qui contient un code de programme qui, lorsqu'il est exécuté sur une unité de calcul, met en œuvre le procédé selon l'une des revendications 1 à 9.
